# FASCICULE DE BREVET EUROPEEN

(11) **EP 1 452 707 B1**
(45) Date de publication et mention de la délivrance du brevet: **16.11.2005**
(21) Numéro de dépôt: 04100755.0
(22) Date de dépôt: 26.02.2004
(51) Int. Cl.: F02C 7/04, F02C 7/055, F02C 7/00, B64D 33/02, B64D 45/00, B64F 1/00

(54) **Dispositif de protection d'une structure d entree d'air d'un moteur a reaction**
Schutzvorrichtung für den Lufteinlass eines Strahltriebwerks
Protective device for the air intake of a jet engine

(30) Priorité: 28.02.2003 FR 0302459
(43) Date de publication de la demande: 01.09.2004
(73) Titulaire: AIRBUS France, 31060 Toulouse (FR)
(72) Inventeur: GARRIC, Stéphane, 31130, BALMA (FR)
(74) Mandataire: Poulin, Gérard

(56) Documents cités:
- GB-A- 2 279 052
- US-A- 2 744 382
- US-A- 3 242 672
- US-A- 3 646 980
- US-A- 4 290 569
- US-A- 5 143 321

## Description

### DOMAINE TECHNIQUE

La présente invention se rapporte de façon générale au domaine de la protection d'une structure d'entrée d'air d'un moteur à réaction équipant un aéronef. Cette protection est notamment destinée à être assemblée sur le moteur durant les phases de stockage prolongé de l'aéronef, afin d'interdire l'accès à l'intérieur du moteur.

### ETAT DE LA TECHNIQUE ANTERIEURE

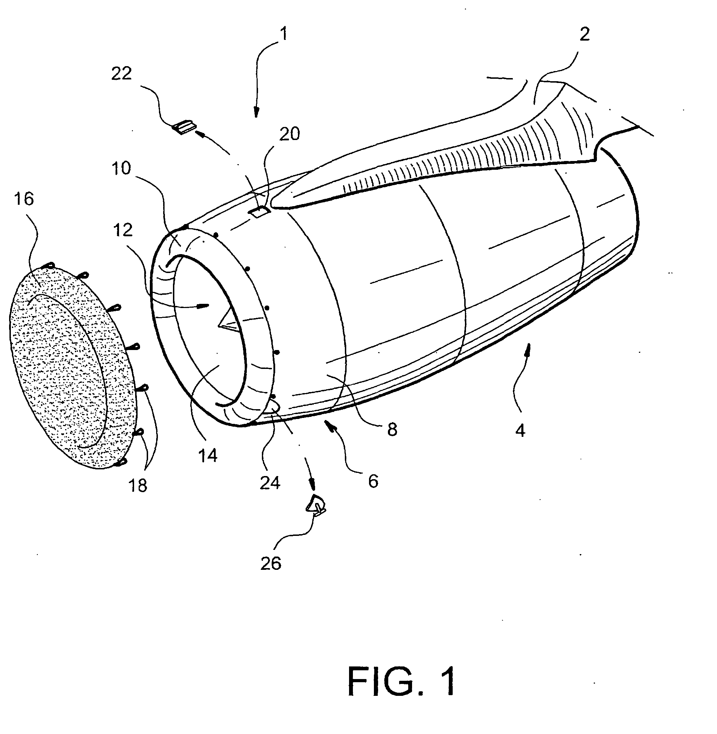

En référence à la figure 1, il est représenté un moteur à réaction 1 classique destiné à être monté sur une aile d'un aéronef (non représenté), par l'intermédiaire d'un mât 2 solidaire d'une nacelle 4 de ce moteur à réaction.

Sur la partie avant de la nacelle 4, il est prévu une structure d'entrée d'air 6, composée d'un capot d'entrée d'air 8, prolongé par une lèvre d'entrée d'air 10. Notons que le capot 8 et la lèvre 10 délimitent conjointement et extérieurement un canal de soufflante annulaire 12, dont une entrée 14 est définie par la lèvre 10.

Ainsi, durant les phases de stockage prolongé de l'aéronef, par exemple pendant la nuit, il est nécessaire d'obturer cette entrée 14 du canal de soufflante 12, afin d'éviter l'intrusion d'objets dans le moteur 1.

Pour ce faire, il est prévu une bâche de protection 16 apte à être assemblée sur la structure d'entrée d'air 6, de façon à recouvrir l'intégralité de l'entrée 14 du canal 12. Habituellement, la bâche de protection 16 est sensiblement en forme de disque et munie d'attaches 18 espacées circonférentiellement, ces attaches 18 étant susceptibles de coopérer avec des attaches complémentaires (non représentées), agencées également circonférentiellement autour du capot d'entrée d'air 8 à proximité de la jonction avec la lèvre 10. Notons que l'assemblage de cette bâche de protection 16 sur la structure d'entrée d'air 6 s'effectue à l'aide d'une plate-forme élévatrice, au moins nécessaire à l'accrochage de la bâche 16 sur la portion supérieure de la structure 6. Une telle bâche est décrite par exemple dans US-A-3 646 980.

D'autre part, le capot d'entrée d'air 8 comporte une écope de ventilation 20 d'un conduit de ventilation (non représenté), ce dernier circulant dans la structure d'entrée d'air 6 du moteur 1.

L'écope de ventilation 20, placée sur la portion supérieure du capot d'entrée d'air 8, doit donc également être obturée pendant les phases de stockage prolongé de l'aéronef, afin que des objets divers, de l'eau ou encore des oiseaux ne soient pas en mesure de s'introduire à l'intérieur du conduit de ventilation.

Pour réaliser l'obturation de l'écope de ventilation 20, il est généralement prévu un simple bouchon 22, destiné à être assemblé par les opérateurs se situant sur la plate-forme élévatrice servant à la fixation de la bâche de protection 16.

Cependant, il est noté que l'écope de ventilation 20 se trouve à une distance relativement éloignée de l'extrémité de la lèvre d'entrée d'air 10, cette distance étant habituellement au moins égale à 1,50 m. Par conséquent, pour réaliser l'opération d'assemblage du bouchon 22 sur l'écope de ventilation 20, un opérateur se situant sur la plate-forme élévatrice doit pratiquement se coucher entièrement sur la portion supérieure du capot d'entrée d'air 8.

Ceci implique bien entendu des problèmes importants de sécurité pour l'opérateur effectuant une telle tâche, tant les risques de chute générés par la position très inconfortable de cet opérateur sont élevés. De plus, les risques provoqués par la réalisation de cet assemblage peuvent fortement inciter les opérateurs à ne pas l'effectuer. De cette façon, lorsqu'une phase de stockage prolongé de l'aéronef n'a pas été précédée par l'obturation de l'écope de ventilation 20, il est alors possible de rencontrer des situations particulièrement dangereuses dans lesquelles des éléments néfastes ont effectivement pénétré à l'intérieur du conduit de ventilation.

En outre, l'opérateur devant obligatoirement se coucher sur la structure d'entrée d'air 6, il peut provoquer de façon inopinée un endommagement par rayure de la surface extérieure de cette structure, par exemple par frottement de sa ceinture sur la peinture du capot 8 et de la lèvre 10.

D'autre part, il est précisé qu'un inconvénient supplémentaire émanant de la présence d'un tel bouchon 22 réside dans le fait que lorsqu'il est assemblé sur l'écope de ventilation 20, ce bouchon 22 n'est pas visible par les opérateurs effectuant des tâches visant à préparer l'aéronef pour une phase de vol. Ainsi, il peut facilement être oublié, et entraîner par conséquent le blocage du conduit de ventilation.

Toujours en référence à la figure 1, on voit que dans sa portion inférieure, à proximité de la lèvre d'entrée d'air 10, le capot d'entrée d'air 8 présente une zone de retrait 24 dans laquelle se situe un ou plusieurs orifices d'échappement (non représentés) d'une conduite d'air chaud (non représentée), cette dernière servant au dégivrage de la structure d'entrée d'air 6 du moteur 1.

Ici encore, lors des phases de stockage prolongé de l'aéronef, il est nécessaire d'obturer l'ensemble des orifices d'échappement, afin d'éviter l'intrusion d'objets ou d'oiseaux à l'intérieur de la conduite d'air chaud.

Pour ce faire, il est aussi prévu un simple bouchon d'obturation 26, recouvrant la totalité de la zone 24 présente sur la portion inférieure du capot d'entrée d'air 8.

Si la localisation spécifique des orifices d'échappement autorise une opération d'assemblage du bouchon 26 plus aisée que celle à effectuer pour le bouchon 22 servant à condamner l'écope de ventilation 20, les risques d'oubli de retrait de ce bouchon 26, lors de la préparation de l'aéronef pour une phase de vol, ne sont pas pour autant exclus.

Comme on peut le constater, la protection de la structure d'entrée d'air du moteur prévue traditionnellement dans l'art antérieur génère des inconvénients majeurs. A ces inconvénients, il est également possible de rajouter le fait que la multiplicité des éléments de protection à prévoir engendre des risques importants de perte de certains de ces éléments, ces risques concernant particulièrement les bouchons d'obturation qui sont de petites dimensions.

Enfin, il est noté que la protection étant nécessaire durant toutes les phases de stockage prolongé de l'aéronef, les divers éléments de protection doivent par conséquent être placés dans la soute à chien, lors de chaque vol de cet aéronef. Ainsi, une valise de stockage de ces divers éléments est requise, ce qui provoque naturellement des contraintes en termes de masse et d'encombrement.

### EXPOSÉ DE L'INVENTION

L'invention a donc pour but de proposer un dispositif de protection d'une structure d'entrée d'air d'un moteur à réaction, le dispositif remédiant au moins partiellement aux inconvénients mentionnés ci-dessus relatifs aux réalisations de l'art antérieur.

Pour ce faire, l'invention a pour objet un dispositif de protection d'une structure d'entrée d'air d'un moteur à réaction, la structure comportant un capot d'entrée d'air ainsi qu'une lèvre d'entrée d'air délimitant conjointement avec le capot un canal de soufflante, le capot disposant d'une portion supérieure munie d'au moins une écope de ventilation et la lèvre définissant une entrée du canal de soufflante, le dispositif comprenant une bâche de protection disposant d'une portion principale réalisée de manière à obturer l'entrée du canal de soufflante lorsque le dispositif est assemblé sur la structure d'entrée d'air du moteur. Selon l'invention, la bâche de protection comporte également une portion secondaire solidaire de la portion principale, cette portion secondaire étant munie de moyens de rigidification et destinée à recouvrir partiellement le capot d'entrée d'air du moteur, afin d'obturer chaque écope de ventilation.

Avantageusement, la portion secondaire de la bâche de protection est sensiblement rigidifiée par les moyens de rigidification, ce qui lui permet de présenter et de conserver une forme préétablie, adaptée pour épouser la partie de la portion supérieure du capot d'entrée d'air sur laquelle se situe l'écope de ventilation. Ainsi, lorsque la portion secondaire de la bâche de protection est correctement positionnée sur la portion supérieure du capot d'entrée d'air, l'écope de ventilation recouverte est condamnée et interdit par conséquent toute intrusion dans la conduite de ventilation.

Avec une telle bâche de protection du dispositif selon l'invention, un opérateur se situant sur la plate-forme élévatrice peut ainsi facilement jeter la portion secondaire rigide afin qu'elle recouvre la partie du capot munie de l'écope de ventilation, par exemple après que l'opérateur ait procédé à un assemblage classique de la portion principale de cette bâche, dans le but de protéger l'entrée du canal de soufflante.

La simplicité de ces opérations d'installation du dispositif selon l'invention vient avantageusement s'ajouter au fait que l'opérateur chargé d'obturer l'écope de ventilation n'est plus contraint de se coucher sur la structure d'entrée d'air du moteur, mais peut au contraire tout contrôler depuis une position stable et sécurisée sur la plate-forme élévatrice. Les risques d'accidents liés à la chute possible de cet opérateur sont donc fortement amoindris, tout comme les risques d'endommagement par rayure de la surface extérieure de la structure d'entrée d'air du moteur.

En outre, le fait que les moyens de protection utilisés pour obturer l'écope de ventilation soient solidaires des moyens employés pour obturer l'entrée du canal de soufflante, permet de générer des avantages conséquents par rapport aux réalisations proposées dans l'art antérieur.

En effet, il est tout d'abord indiqué que lorsque la bâche de protection est retirée du moteur, cela provoque directement la libération de l'écope de ventilation. Par conséquent, les risques d'oubli de retrait de la protection de cette écope sont quasiment réduits à néant, dans la mesure où la présence de cette protection est intégralement liée à la présence de la protection de l'entrée du canal de soufflante, qui est quant à elle largement visible par des opérateurs se trouvant au sol.

De plus, la liaison permanente entre la portion secondaire et la portion principale de la bâche de protection réduit considérablement les risques de perte des divers éléments utilisés.

Préférentiellement, les moyens de rigidification équipant la portion secondaire de la bâche de protection se prolongent dans la partie principale de cette bâche. La conséquence directe d'un tel agencement est que la jonction entre la portion principale et la portion secondaire de la bâche de protection est sensiblement rigide. De cette façon, lorsque la portion principale est assemblée et que la portion secondaire de la bâche de protection est lancée sur le capot d'entrée d'air, celle-ci est encore davantage assurée d'occuper une position adéquate sur ce même capot.

De manière préférentielle, les moyens de rigidification comprennent une pluralité de lamelles rigides préformées par rapport au galbe de la structure d'entrée d'air du moteur, afin que la bâche de protection du dispositif épouse cette structure du mieux possible, et que les risques d'intrusion d'éléments quelconques dans le conduit de ventilation soient quasiment nuls. Notons que les lamelles rigides sont de préférence agencées de sorte que la portion secondaire de la bâche de protection soit pliable, cette caractéristique permettant notamment de diminuer considérablement l'encombrement du dispositif de protection destiné à être stocké dans la soute à chien de l'aéronef.

Dans une telle configuration, on peut alors prévoir que les lamelles rigides sont également agencées de sorte que lorsque le dispositif est assemblé sur la structure d'entrée d'air du moteur, elles forment des rangées sensiblement parallèles à un axe principal longitudinal de ce moteur. Notons à titre indicatif que pour obtenir une portion secondaire pliable, les rangées peuvent chacune être constituées de plusieurs lamelles rigides disposées dans le prolongement les unes des autres, les parties de la bâche de protection situées entre deux lamelles directement consécutives pouvant alors avantageusement servir de zone de pliage.

En outre, les lamelles rigides, de préférence métalliques, peuvent être incorporées à la bâche de protection du dispositif, cette bâche étant de préférence réalisée en tissu. Le dispositif de protection ainsi configuré permet de ne pas provoquer d'endommagement, notamment par rayure, de la surface extérieure de la structure d'entrée d'air du moteur.

Préférentiellement, la portion principale de la bâche de protection est sensiblement en forme de disque et la portion secondaire de cette bâche est sensiblement en forme de bande, une extrémité de la portion secondaire étant raccordée à la portion principale au niveau d'une circonférence de cette dernière.

A cet égard, la bâche de protection peut être conçue de sorte que lorsque le dispositif est assemblé sur la structure d'entrée d'air du moteur, la circonférence de la portion principale de la bâche de protection se situe à proximité d'une jonction entre le capot d'entrée d'air et la lèvre d'entrée d'air de la structure d'entrée d'air du moteur.

Le dispositif de protection peut par ailleurs comporter des sangles de fixation de la portion secondaire, les sangles étant raccordées à l'autre extrémité de la portion secondaire, et susceptibles d'entourer le capot d'entrée d'air de la structure d'entrée d'air du moteur. Ainsi, ces sangles permettent avantageusement de parer aux effets néfastes que pourrait provoquer le vent sur la portion secondaire de la bâche, tels qu'un soulèvement de cette dernière autorisant l'intrusion d'éléments à l'intérieur de la conduite de ventilation.

Toujours de manière préférentielle, la bâche de protection comporte en outre une portion tertiaire solidaire de la portion principale, la portion tertiaire étant munie de moyens de rigidification et destinée à recouvrir partiellement le capot d'entrée d'air du moteur, afin d'obturer chaque orifice d'échappement appartenant à une conduite d'air chaud et étant prévu sur une portion inférieure du capot d'entrée d'air.

Ainsi, la protection des trois emplacements critiques de la structure d'entrée d'air du moteur, à savoir l'entrée du canal de soufflante, l'écope de ventilation et les orifices d'échappement, peut être réalisée par l'intermédiaire d'une bâche unique dont toutes les portions sont solidaires.

De cette façon, outre le très faible risque de perte des divers éléments de protection, le dispositif ne nécessite plus de valise de stockage, de sorte que les contraintes de masse et d'encombrement relatives à la présence de ce type de valise et rencontrées dans l'art antérieur n'existent plus. Effectivement, le dispositif uniquement constitué de la bâche de protection et de divers moyens de fixation susceptibles d'assurer son assemblage sur la structure d'entrée d'air du moteur, prend avantageusement la forme d'une pièce unique facilement apte à être pliée, puis directement placée dans la soute à chien de l'aéronef.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1, déjà décrite, représente une vue partiellement éclatée en perspective d'un moteur à réaction d'un aéronef équipé de moyens de protection classiques de la structure d'entrée d'air de ce moteur,
- la figure 2 représente une vue partielle en perspective du moteur représenté sur la figure 1, un dispositif de protection selon un mode de réalisation préféré de la présente invention étant assemblé sur la structure d'entrée d'air de ce moteur,
- la figure 3 représente une vue partielle de dessus de la figure 2, et
- la figure 4 représente une vue partielle de dessous de la figure 2.

### EXPOSÉ DÉTAILLÉ D'UN MODE DE RÉALISATION PRÉFÉRÉ

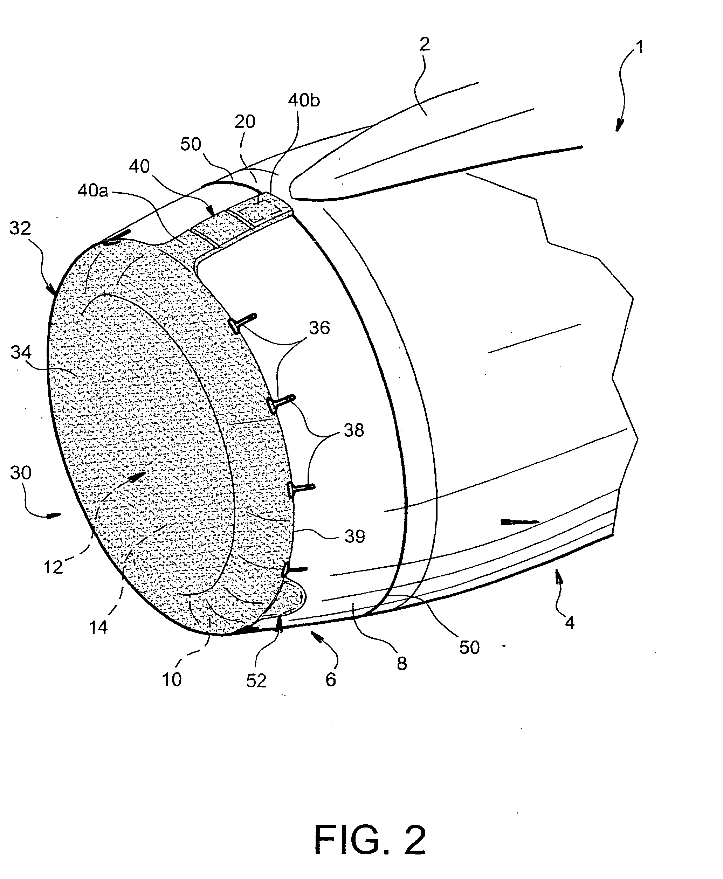

En référence à la figure 2, on voit une structure d'entrée d'air 6 d'un moteur à réaction classique 1, destiné à être monté sur un aéronef (non représenté) par l'intermédiaire d'un mât 2 solidaire d'une nacelle 4 du moteur, ce dernier étant sensiblement identique à celui représenté sur la figure 1 et décrit ci-dessus.

Par conséquent, notons que sur cette figure 2, les éléments portant les mêmes références numériques que celles attachées aux éléments représentés sur la figure 1, correspondent à des éléments identiques ou similaires.

Ainsi, la structure d'entrée d'air 6 se trouvant à l'avant de la nacelle 4 est composée d'un capot d'entrée d'air 8, muni d'une écope de ventilation 20 sur sa portion supérieure, cette écope 20 appartenant à une conduite de ventilation (non représentée). Il est précisé qu'habituellement, l'écope de ventilation 20 se situe au niveau de la partie la plus haute du capot d'entrée d'air 8, sensiblement dans le prolongement du mât 2.

Par ailleurs, le capot 8 comprend également un ou une pluralité d'orifices d'échappement (non représentés sur la figure 2) appartenant à une conduite d'air chaud (non représentée), ces orifices d'échappement étant prévus sur une portion inférieure du capot d'entrée d'air 8.

La structure d'entrée d'air 6 comporte en outre une lèvre d'entrée d'air 10, agencée dans le prolongement du capot 8, cette lèvre 10 ayant pour but d'assurer le partage de l'air entre la partie qui pénètre à l'intérieur du moteur 1 et la partie qui s'écoule autour de la nacelle 4.

De plus, le capot d'entrée d'air 8 et la lèvre d'entrée d'air 10 délimitent conjointement et extérieurement un canal de soufflante annulaire 12, dont une entrée 14 est définie par la lèvre 10.

Toujours en référence à la figure 2, il est représenté un dispositif de protection 30 selon un mode de réalisation préféré de la présente invention. Ce dispositif 30 peut notamment être assemblé sur la structure d'entrée d'air 6 durant les phases de stockage prolongé de l'aéronef, afin d'éviter l'intrusion d'éléments quelconques à l'intérieur du moteur 1, par l'écope de ventilation 20, les orifices d'échappement, ou encore l'entrée 14 du canal de soufflante 12.

Le dispositif de protection 30 est essentiellement muni d'une bâche de protection 32, de préférence en tissu, dont une portion principale 34 est apte à obturer l'entrée 14 du canal de soufflante 12.

Cette portion principale 34 prend préférentiellement la forme d'un disque, dont une partie d'extrémité annulaire est munie d'attaches 36 disposées circonférentiellement, ces attaches 36 faisant partie intégrante du dispositif 30 et étant agencées de manière à pouvoir coopérer avec des attaches complémentaires 38, prévues également circonférentiellement autour du capot d'entrée d'air 8, à proximité de la jonction avec la lèvre 10.

Ainsi, lorsque la portion principale 34 de la bâche de protection 32 a été assemblée sur la structure 6 par l'intermédiaire des attaches 36 et 38, la partie d'extrémité annulaire de cette portion principale 34 épouse la lèvre 10, de sorte que l'entrée 14 du canal de soufflante 12 soit totalement obturée.

De plus, à titre d'exemple indicatif et comme cela est visible sur la figure 2, on peut prévoir qu'une fois installée sur la structure 6, la portion principale 34 en forme de disque est sensiblement tendue et que sa circonférence 39 se situe à proximité de la jonction entre le capot d'entrée d'air 8 et la lèvre d'entrée d'air 10. De cette façon, l'obturation provoquée permet d'interdire de façon sûre l'intrusion d'objets à l'intérieur du canal de soufflante 12 du moteur 1.

D'autre part, la bâche de protection 32 comprend une portion secondaire 40, solidaire de la portion principale 34. La portion secondaire 40, préférentiellement en forme de bande, est destinée à recouvrir partiellement la portion supérieure du capot d'entrée d'air 8, de manière à obturer l'écope de ventilation 20, et d'interdire par conséquent l'intrusion d'objets, d'oiseaux ou d'eau à l'intérieur de la conduite de ventilation.

Comme on peut le voir sur la figure 2, la portion secondaire 40 en forme de bande dispose d'une première extrémité 40a raccordée à la portion principale 34 au niveau de la circonférence 39 de cette dernière, ainsi que d'une seconde extrémité 40b conçue de façon à s'étendre au-delà de l'écope de ventilation 20, lorsque les portions principale 34 et secondaire 40 sont assemblées sur la structure 6.

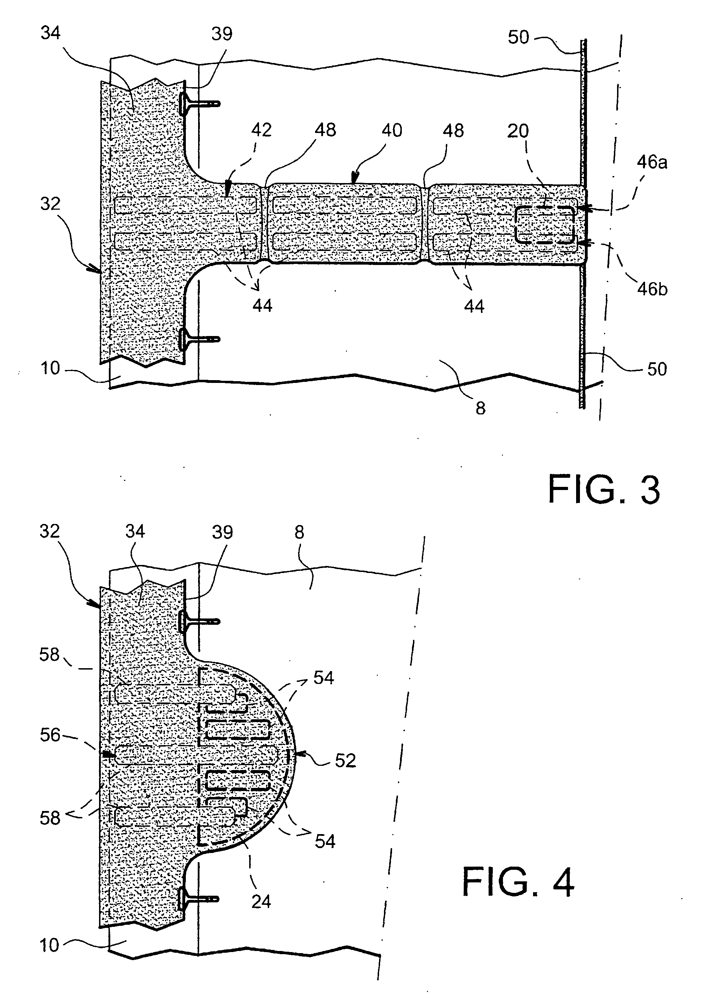

En référence à présent conjointement aux figures 2 et 3, la portion secondaire 40 de la bâche de protection 32 est munie de moyens de rigidification 42, ces derniers permettant le plaquage de cette portion 40 contre le capot d'entrée d'air 8. En d'autres termes, les moyens de rigidification 42 permettent de rigidifier le tissu constitutif de la portion 40 afin qu'elle adopte une configuration donnée, prévue pour qu'une fois lancée sur la structure 6, au moins une grande partie de la portion secondaire 40 épouse correctement le capot 8 et interdise par conséquent l'accès à l'écope de ventilation 20.

Dans ce mode de réalisation préféré, les moyens de rigidification 42 sont composés d'une pluralité de lamelles rigides 44, de préférence métalliques et préformées au galbe de la structure d'entrée d'air 6. De cette façon, la portion secondaire 40 de la bâche 32 est en mesure d'épouser très précisément le capot 8, notamment grâce au poids des lamelles rigides 44, qui engendre un plaquage satisfaisant du tissu contre la surface extérieure de ce capot 8.

Notons qu'afin d'éviter les risques d'endommagement par rayure de la surface extérieure du capot d'entrée d'air 8, il est possible d'incorporer les lamelles rigides 44 à la bâche de protection 32, par exemple en les interposant dans des espaces fermés (non représentés) délimités par deux couches de tissu superposées constitutives de la bâche 32.

Dans ce mode de réalisation préféré de la présente invention, les lamelles rigides 44 sont non seulement prévues pour équiper la portion secondaire 40 de la bâche 32, mais s'étendent également jusque dans la portion d'extrémité annulaire de la portion principale 34, qui est destinée à être en contact avec la lèvre d'entrée d'air 10 lorsque le dispositif de protection 30 est assemblé sur la structure 6.

De ce fait, la partie de la portion d'extrémité annulaire équipée des lamelles rigides 44 ainsi que la première extrémité 40a de la portion secondaire 40 forment ensemble une zone sensiblement rigide. Par conséquent, lorsque la portion principale 34 de la bâche 32 est effectivement assemblée sur la structure 6 du moteur 1, cette portion 34 tendue par les attaches 36 et 38 induit un positionnement imposé pour la portion d'extrémité annulaire, et donc également un positionnement imposé pour l'extrémité 40a reliée sensiblement rigidement à la portion d'extrémité annulaire. Bien entendu, ces positionnements imposés sont adaptés pour que lorsque la portion secondaire 40 est lancée sur le capot 8, elle épouse correctement la surface extérieure de celui-ci.

Notons à titre indicatif que la forme spécifique des lamelles rigides 44, préformées au galbe de la lèvre 10 au niveau de la portion d'extrémité annulaire et préformées au galbe du capot 8 au niveau de l'extrémité 40a, participe également à placer cette extrémité 40a dans la position la plus adéquate possible pour aboutir à l'obturation de l'écope de ventilation 20.

Plus spécifiquement en référence à la figure 3, on voit que les lamelles rigides 44 se présentent sous forme de deux rangées 46a et 46b s'étendant dans une direction sensiblement parallèle à un axe principal longitudinal (non représenté) du moteur 1, lorsque le dispositif 30 est assemblé sur la structure d'entrée d'air 6. Bien entendu, le nombre et le positionnement des rangées peuvent être adaptés en fonction des conditions rencontrées, sans sortir du cadre de l'invention.

Dans ce mode de réalisation préféré de la présente invention, on peut voir que chacune des deux rangées 46a et 46b comporte une pluralité de lamelles rigides 44 disposées dans le prolongement les unes des autres. De cette façon, il est possible d'agencer ces différentes lamelles 44 de manière à obtenir des zones de pliage 48 de la portion secondaire 40, ces zones de pliage 48 correspondant à des bandelettes de tissu s'étendant sensiblement perpendiculairement à la direction des rangées 46a et 46b, et donc sensiblement perpendiculairement à l'axe principal longitudinal du moteur 1.

Ainsi, lorsqu'un opérateur se situe sur une plate-forme élévatrice et qu'il a terminé l'assemblage de la portion principale 34 de la bâche de protection 32 sur la structure 6, il peut facilement agripper la seconde extrémité 40b de la portion secondaire 40, puis la lancer de façon à ce que la portion 40 se déroule entièrement sur le capot d'entrée d'air 8. D'autre part, il est naturellement indiqué que le fait que la portion secondaire 40 soit pliable permet de limiter l'encombrement du dispositif de protection 30.

De plus, comme indiqué précédemment, la première extrémité 40a étant dans une position quasiment figée après l'assemblage de la portion principale 34, l'opérateur n'aura plus qu'à s'assurer que la portion secondaire 40 s'est entièrement déroulée, pour avoir la certitude qu'elle recouvre correctement la structure 6 et l'écope de ventilation 20.

Néanmoins, il serait naturellement possible de prévoir que la portion secondaire 40 se présente sous la forme d'une portion rigide non pliable, sans sortir du cadre de l'invention.

Pour faire face à un éventuel soulèvement de la portion secondaire 40 de la bâche 32, le dispositif de protection 30 peut comprendre des sangles de fixation 50 de cette portion secondaire 40. Ces sangles 50, préférentiellement réalisées dans un matériau non-abrasif afin de ne pas rayer la peinture de la surface extérieure du capot 8, sont solidaires de la seconde extrémité 40b de la portion 40, et destinées à entourer la nacelle 4 avant d'être raccordées entre elles.

Notons que les sangles de fixation 50 sont de préférence fixées sur ou à proximité de la partie de la portion secondaire 40 destinée à recouvrir l'écope de ventilation 20, de sorte que toute intrusion dans le conduit de ventilation soit définitivement évitée.

En référence conjointement aux figures 2 et 4, on voit que la bâche de protection 32 comporte également une portion tertiaire 52, solidaire de la portion principale 34. La portion tertiaire 52, préférentiellement en forme de demi-disque, est destinée à recouvrir partiellement la portion inférieure du capot d'entrée d'air 8, de manière à obturer chaque orifice d'échappement 54, et d'interdire par conséquent l'intrusion d'objets ou d'oiseaux à l'intérieur de la conduite d'air chaud.

Notons que cette portion tertiaire 52 est conçue selon un principe similaire à celui de la portion secondaire 40, à la différence qu'il n'est pas pliable. En effet, la zone de retrait 24 dans laquelle se situe la pluralité d'orifices d'échappement 54 est apte à être automatiquement recouverte par la portion tertiaire 52, lorsque la portion principale 34 est assemblée sur la structure 6.

Cette possibilité est offerte par la présence de moyens de rigidification 56, prenant de préférence également la forme d'une pluralité de lamelles rigides 58, préformées au galbe de la structure 6 et s'étendant chacune jusque dans la portion d'extrémité annulaire de la portion principale 34.

Bien entendu, diverses modifications peuvent être apportées par l'homme du métier au dispositif de protection 30 qui vient d'être décrit, uniquement à titre d'exemple non limitatif.

## Revendications

1. Dispositif de protection (30) d'une structure d'entrée d'air (6) d'un moteur à réaction (1), ladite structure (6) comportant un capot d'entrée d'air (8) ainsi qu'une lèvre d'entrée d'air (10) délimitant conjointement avec ledit capot (8) un canal de soufflante (12), le capot (8) disposant d'une portion supérieure munie d'au moins une écope de ventilation (20) et la lèvre (10) définissant une entrée (14) du canal de soufflante (12), le dispositif (30) comprenant une bâche de protection (32) disposant d'une portion principale (34) réalisée de manière à obturer l'entrée (14) du canal de soufflante (12) lorsque le dispositif (30) est assemblé sur la structure d'entrée d'air (6) du moteur (1), **caractérisé en ce que** la bâche de protection (32) comporte également une portion secondaire (40) solidaire de la portion principale (34), ladite portion secondaire (40) étant munie de moyens de rigidification (42) et destinée à recouvrir partiellement le capot d'entrée d'air (8) du moteur (1), afin d'obturer chaque écope de ventilation (20).

2. Dispositif de protection (30) selon la revendication 1, **caractérisé en ce que** les moyens de rigidification (42) équipant la portion secondaire (40) de la bâche de protection (32) se prolongent dans la partie principale (34) de ladite bâche (32).

3. Dispositif de protection (30) selon la revendication 1 ou la revendication 2, **caractérisé en ce que** les moyens de rigidification (42) comprennent une pluralité de lamelles rigides (44) préformées par rapport au galbe de la structure d'entrée d'air (6) du moteur (1).

4. Dispositif de protection (30) selon la revendication 3, **caractérisé en ce que** les lamelles rigides (44) sont agencées de sorte que la portion secondaire (40) de la bâche de protection (32) soit pliable.

5. Dispositif de protection (30) selon la revendication 3 ou la revendication 4, **caractérisé en ce que** les lamelles rigides (44) sont agencées de sorte que lorsque le dispositif (30) est assemblé sur la structure d'entrée d'air (6) du moteur (1), elles forment des rangées (46a,46b) sensiblement parallèles à un axe principal longitudinal de ce moteur (1).

6. Dispositif de protection (30) selon l'une quelconque des revendications 3 à 5, **caractérisé en ce que** les lamelles rigides (44) sont incorporées à la bâche de protection (32) du dispositif (30).

7. Dispositif de protection (30) selon l'une quelconque des revendications 3 à 6, **caractérisé en ce que** la bâche de protection (32) est en tissu, et **en ce que** les lamelles rigides (44) sont métalliques.

8. Dispositif de protection (30) selon l'une quelconque des revendications précédentes, **caractérisé en ce que** la portion principale (34) de la bâche de protection (32) est sensiblement en forme de disque et **en ce que** la portion secondaire (40) de cette bâche (32) est sensiblement en forme de bande, une extrémité (40a) de ladite portion secondaire (40) étant raccordée à ladite portion principale (34) au niveau d'une circonférence (39) de cette dernière.

9. Dispositif de protection (30) selon la revendication 8, **caractérisé en ce que** la bâche de protection (32) est conçue de sorte que lorsque le dispositif (30) est assemblé sur la structure d'entrée d'air (6) du moteur (1), la circonférence (39) de la portion principale (34) de la bâche de protection (32) se situe à proximité d'une jonction entre le capot d'entrée d'air (8) et la lèvre d'entrée d'air (10) de la structure d'entrée d'air (6) du moteur (1).

10. Dispositif de protection (30) selon la revendication 8 ou la revendication 9, **caractérisé en ce que** le dispositif (30) comporte en outre des sangles de fixation (50) de ladite portion secondaire (40), lesdites sangles (50) étant raccordées à l'autre extrémité (40b) de ladite portion secondaire (40), et susceptibles d'entourer le capot d'entrée d'air (8) de la structure d'entrée d'air (6) du moteur (1).

11. Dispositif de protection (30) selon l'une quelconque des revendications précédentes, **caractérisé en ce que** la bâche de protection (32) comporte en outre une portion tertiaire (52) solidaire de la portion principale (34), ladite portion tertiaire (52) étant munie de moyens de rigidification (56) et destinée à recouvrir partiellement le capot d'entrée d'air (8) du moteur (1), afin d'obturer chaque orifice d'échappement (54) appartenant à une conduite d'air chaud et étant prévu sur une portion inférieure du capot d'entrée d'air (8).

## Claims

1. Protection device (30) for an air intake structure (6) of a jet engine (1), said structure comprising an air intake cowl (8) and an air intake lip (10), that jointly delimit a fan case ducting (12) with said cowl, the cowl (8) having a top portion provided with at least one ventilation scoop (20) and the lip (10) defining a fan case ducting intake (14), the device comprising a protective tarpaulin (32) with a main portion (34) designed to close off the fan case ducting intake (14) when the device is assembled on the engine air intake structure (6), **characterized in that** the protective tarpaulin (32) also comprises a secondary portion (40) fixed to the main portion (32), said secondary portion (40) being provided with stiffening means (42) and designed to partially cover the air intake cowl (8) of the engine (1), to close off each ventilation scoop (20).

2. Protection device (30) according to claim 1, **characterized in that** the stiffening means (42) fitted on the secondary portion (40) of the protective tarpaulin (32) are prolonged in the main part (34) of the said tarpaulin (32).

3. Protection device (30) according to claim 1 or claim 2, **characterized in that** the stiffening means (42) comprise several rigid strips (44) preformed to match the curve of the air intake structure (6) of the engine (1).

4. Protection device (30) according to claim 3, **characterized in that** the rigid strips (44) are arranged such that the secondary portion (40) of the protective tarpaulin (32) is foldable.

5. Protection device (30) according to claim 3 or claim 4, **characterized in that** the rigid strips (44) are arranged such that when the device (30) is assembled on the air intake structure (6) of the engine (1), they form rows (46a, 46b) approximately parallel to a main longitudinal axis of this engine (1).

6. Protection device (30) according to any one of claims 3 to 5, **characterized in that** the rigid strips (44) are incorporated into the protective tarpaulin (32) of the device (30).

7. Protection device (30) according to any one of claims 3 to 6, **characterized in that** the protective tarpaulin (32) is made of fabric and **in that** the rigid strips (44) are metallic.

8. Protection device (30) according to any one of the above claims, **characterized in that** the main portion (34) of the protective tarpaulin (32) is approximately in the shape of a disk, and **in that** the secondary portion (40) of this tarpaulin (32) is approximately in the shape of a band, one end (40a) of the said secondary portion (40) being connected to the said main portion (34) around the circumference (39) of this main portion.

9. Protection device (30) according to claim 8, **characterized in that** the protective tarpaulin (32) can be designed such that when the device (30) is assembled on the air intake structure (6) of the engine (1), the circumference (39) of the main portion (34) of the protective tarpaulin (32) is close to a junction between the air intake cowl (8) and the air intake lip (10) on the air intake structure (6) of the engine (1).

10. Protection device (30) according to claim 8 or claim 9, **characterized in that** the device (30) also comprises attachment straps (50) for said secondary portion (40), said straps (50) being connected to the other end (40b) of said secondary portion (40), and capable of surrounding the air intake cowl (8) of the air intake structure (6) of the engine (1).

11. Protection device (30) according to any one of the above claims, **characterized in that** the protective tarpaulin (32) also comprises a tertiary portion (52) fixed to the main portion (34), said tertiary portion (52) being provided with stiffening means (56) and designed to partially cover the air intake cowl (8) of the engine (1), to close off each exhaust orifice (54) forming part of a hot air duct and being provided on a lower portion of the air intake cowl (8).

## Patentansprüche

1. Vorrichtung (30) zum Schutz einer Lufteintrittsstruktur (6) eines Strahltriebwerks (1), wobei die Struktur (6) eine Lufteintrittshaube (8) sowie eine Lufteintrittslippe (10) aufweist, die zusammen mit der Haube (8) einen Gebläsekanal (12) begrenzt, wobei die Haube (8) über einen oberen Abschnitt verfügt, der mit mindestens einer Belüftungsklappe (20) versehen ist, und die Lippe (10) einen Eingang (14) des Gebläsekanals (12) festlegt, wobei die Vorrichtung (30) ein Schutzgehäuse (32) umfasst, das einen Hauptabschnitt (34) aufweist, der so ausgebildet ist, dass er den Eingang (14) des Gebläsekanals (12) verschließt, wenn die Vorrichtung (30) auf der Lufteintrittsstruktur (6) des Triebwerks (1) montiert ist bzw. wird, **dadurch gekennzeichnet, dass** das Schutzgehäuse (32) auch einen zweiten Abschnitt (40) aufweist, der mit dem Hauptabschnitt (34) einstückig ist, wobei der zweite Abschnitt (40) mit Versteifungsmitteln (42) versehen ist und dazu vorgesehen ist, teilweise die Lufteintrittshaube (8) des Triebwerks (1) zu bedecken, um jede Belüftungsklappe (20) zu verschließen.

2. Schutzvorrichtung (30) nach Anspruch 1, **dadurch gekennzeichnet, dass** die Versteifungsmittel (42), welche am zweiten Abschnitt (40) des Schutzgehäuses (32) vorgesehen sind, sich in den Hauptabschnitt (34) des Gehäuses (32) fortsetzen.

3. Schutzvorrichtung (30) nach Anspruch 1 oder 2, **dadurch gekennzeichnet, dass** die Versteifungsmittel (42) mehrere starre Lamellen (44) aufweisen, die bezüglich der Form bzw. Kontur der Lufteintrittsstruktur (6) des Triebwerks (1) vorgeformt sind.

4. Schutzvorrichtung (30) nach Anspruch 3, **dadurch gekennzeichnet, dass** die starren Lamellen (44) derart angeordnet sind, dass der zweite Abschnitt (40) des Schutzgehäuses (32) faltbar ist.

5. Schutzvorrichtung (30) nach Anspruch 3 oder 4, **dadurch gekennzeichnet, dass** die starren Lamellen (44) derart angeordnet sind, dass sie, wenn die Vorrichtung (30) auf die Lufteintrittsstruktur (6) des Triebwerks (1) montiert wird, Reihen (46a,46b) bilden, die im wesentlichen parallel zu einer Haupt-Längsachse des Triebwerks (1) sind.

6. Schutzvorrichtung (30) nach einem der Ansprüche 3 bis 5, **dadurch gekennzeichnet, dass** die starren Lamellen (44) in das Schutzgehäuse (32) der Vorrichtung (30) aufgenommen sind.

7. Schutzvorrichtung (30) nach einem der Ansprüche 3 bis 6, **dadurch gekennzeichnet, dass** das Schutzgehäuse (32) aus einem Gewebe und die starren Lamellen (44) aus Metall bestehen.

8. Schutzvorrichtung (30) nach einem der vorangehenden Ansprüche, **dadurch gekennzeichnet, dass** der Hauptabschnitt (34) des Schutzgehäuses (32) im wesentlichen die Form einer Scheibe aufweist, und dass der zweite Abschnitt (40) dieses Gehäuses (32) im wesentlichen die Form eines Bandes aufweist, wobei ein Ende (40a) des zweiten Abschnitts (40) mit dem Hauptabschnitt (34) auf Höhe eines Umfangs (39) des letzteren verbunden ist.

9. Schutzvorrichtung (30) nach Anspruch 8, **dadurch gekennzeichnet, dass** das Schutzgehäuse (32) derart gestaltet ist, dass bei der Montage der Vorrichtung (30) auf die Lufteintrittsstruktur (6) des Triebwerks (1) der Umfang (39) des Hauptabschnitts (34) des Schutzgehäuses (32) sich in Nähe einer Verbindungsstelle zwischen der Lufteintrittshaube (8) und der Lufteintrittslippe (10) der Lufteintrittsstruktur (6) des Triebwerks (1) befindet.

10. Schutzvorrichtung (30) nach Anspruch 8 oder 9, **dadurch gekennzeichnet, dass** die Vorrichtung (30) außerdem Befestigungsgurte (50) des zweiten Abschnitts (40) umfasst, wobei die Gurte (50) mit dem anderen Ende (40b) des zweiten Abschnitts (40) verbunden sind und die Lufteintrittshaube (8) der Lufteintrittsstruktur (6) des Triebwerks (1) umgreifen können.

11. Schutzvorrichtung (30) nach einem der vorangehenden Ansprüche, **dadurch gekennzeichnet, dass** das Schutzgehäuse (32) außerdem einen dritten Abschnitt (52) umfasst, der mit dem Hauptabschnitt (34) einstückig ist, wobei der dritte Abschnitt (52) mit Versteifungsmitteln (56) versehen und dazu vorgesehen ist, teilweise die Lufteintrittshaube (8) des Triebwerks (1) zu bedecken, um jede Austrittsöffnung (54), die zu einer Heißluftleitung gehört und an einem unteren Abschnitt der Lufteintrittshaube (8) vorgesehen ist, zu verschließen.
